# EUROPEAN PATENT SPECIFICATION

(11) **EP 3 294 254 B1**
(45) Date of publication and mention of the grant of the patent: **24.06.2020**
(21) Application number: 16793327.4
(22) Date of filing: 09.05.2016
(51) Int. Cl.: A61J 1/10, A61J 1/14, B65D 30/22, B65D 33/00, F25D 31/00

(54) **CRYOGENIC STORAGE BAG**
KRYOGENER AUFBEWAHRUNGSBEUTEL
SAC DE RANGEMENT CRYOGÉNIQUE

(30) Priority: 12.05.2015 US 201562160146 P
(43) Date of publication of application: 21.03.2018
(73) Proprietor: Thermogenesis Corp., Rancho Cordova, CA 95742 (US)
(72) Inventor: COELHO, Philip, H., Sacramento, CA 95818 (US)
(74) Representative: Leonard, Thomas Charles
(86) International application number: PCT/US2016/031496
(87) International publication number: WO 2016/183018

(56) References cited:
- WO-A2-2007/107826
- US-A- 6 146 124
- US-A1- 2004 254 560
- US-A1- 2006 167 401
- US-A1- 2007 257 039
- US-A1- 2008 103 428
- US-B1- 6 213 334
- US-B1- 6 361 642

## Description

### RELATED APPLICATIONS

This application claims priority from the United States provisional application with Serial Number 62/160,146, which was filed on May 12, 2015.

### BACKGROUND OF THE DISCLOSURE

### TECHNICAL FIELD OF THE DISCLOSURE

The present disclosure relates generally to cryogenic storage bags, and more particularly to a cryogenic storage bag having multiple storage compartments, the compartments being connected together utilizing a plurality of frangible tabs that provide connections between the compartments at cryogenic temperatures to enable strong, reliable bonds at room temperature but simultaneously allow easy and reliable separation of the storage compartments from one another with a simple intentional rotating motion at cryogenic temperatures.

### DESCRIPTION OF THE RELATED ART

Cryogenic storage systems have been used in the art to preserve various biological specimens including but not limited to cells, blood, and living tissue at low temperatures for sustained periods. When biological specimens, and in particular blood products are stored in these cryogenic storage systems it is common to store them in plastic storage bags/cryogenic freezing bags. These bags are generally fabricated from materials that maintain sufficient strength to withstand both (a) normal handling at room temperature and cryogenic temperatures; and (b) the expansion of water based cell solutions/blood products during freezing. Such bags are also typically constructed of materials that are not toxic to cells. Examples of such materials include fluorinated ethylene propylene (FEP), ethylene vinyl acetate (EVA) and high molecular weight polyethylene (HMWPE).

Different fabrication methods for cryogenic freezing/storage bags have been developed. One such method includes welding at their perimeter two plastic sheets positioned on top of one another. Other methods include vacuum forming plastic sheets in three-dimensional molds before the edges are welded together; and blow molding heated liquid plastics in three-dimensional molds into a seamless construction. In this example, tubing and ports that provide ingress and egress of the cell solution/blood products are welded into the perimeter of the bags as part of the fabrication process.

Several existing cryogenic freezing bags permit the partition of liquid between multiple compartments. The most common design of such a bag includes two compartments, one containing 80% of the liquid cell solution/suspension, and the other containing 20%. This design includes liquid flow channels directly between the 80% and 20% compartments at their closest point, which permit the bag to be filled from an inlet tube attached to only one of the two compartments with the liquid being distributed between the two compartments via the flow channels. Generally, after both compartments are filled, the flow channels are sealed with a Radio Frequency (RF) sealer so that the compartments are attached but, theoretically, are separated from each other without violating the hermetic integrity of either compartment. Separating the two compartments without violating the integrity of either compartment requires that a precise cut be made through the center of the RF seals of the flow channels along the axis of the two compartments. Once filled with fluid and fully hermetically sealed at the input tube and between the compartments, the bags are placed in a canister, which is then placed in a cryogenic storage system.

Conventional plastic storage bags/cryogenic freezing bags suffer from several disadvantages. The act of sealing the liquid flow channels between the multiple compartments of the cryogenic freezing bags is problematic. RF seals are designed for sealing thick-walled Polyvinyl chloride (PVC) plastic tubes and consequently deliver more RF energy than is required for sealing the flow channels. This excessive RF energy causes a thinning of the material comprising and surrounding the seal. This thinned material is more fragile than non-thinned material and increases the likelihood of breakage or leakage at that point, and particularly so at cryogenic temperatures.

The difficulty of sealing the liquid flow channels is compounded by the presence of cell cryoprotectant in the blood product to be stored. The near universally utilized cryoprotectant for mononuclear cells is Dimethyl Sulfoxide (DMSO). DMSO changes the conductivity and dielectric constant of the blood such that when an RF sealer head energizes to seal a liquid flow channel, an electric arc is created between the sealing head and the DMSO/blood solution, which can puncture one or more of the compartment walls containing blood. When this occurs, the blood product in the punctured bag compartment is typically discarded as it becomes contaminated by the non-sterile exterior bag surface.

Another disadvantage of conventional cryogenic storage bags is that even if flow channels are successfully sealed by RF welding, in the circumstance in which one of the two compartments is desired to be retrieved from cryogenic temperatures and the other compartment retained at cryogenic temperatures, separation of one compartment from another requires careful cutting of the sealed region of the flow channels. In order to avoid transient warming events, which damage cell viability, this careful cutting is optimally conducted at cryogenic temperatures that generate a fog of condensed vapor droplets when the storage freezer lid is opened. The visibility obscuring fog and the fact that the cutting must be accomplished by a technician wearing heavy insulated gloves both contribute to an increased rate of human error during the cutting process. Further, the method of cutting slightly off the center-line of the RF seal can cause a leak and subsequent contamination of the blood product.

Due to these aforementioned limitations, some blood processing centers choose unsealing the compartments, thus sacrificing the benefits of being able to access multiple hermetically sealed aliquots of a rare cell solution.

Yet another disadvantage of conventional multi-compartment cryogenic storage bags is the required separation between the multiple compartments where the RF sealing must occur. This space must be wide enough to accommodate the sealer head, without allowing the sealer head to touch the walls of the compartments on either side, which when occurring increases the possibility of arcing. This lost storage volume inside the storage bag is very precious because the cryogenic storage system requires expensive vacuum jacketed capital equipment, LN2 distribution plumbing, and a continuous supply of LN2. Thus, this method requires and wastes a great deal of storage space that would otherwise be available for blood storage, thereby increasing the overall bulk of each multi-compartment bag. The more compartments there are, the greater will be the loss of storage capacity for all cryogenic storage freezers. US 2006/167401 A1 discloses apparatus and method for stem cells preservation and usage. US 2008/103428 A1 discloses an apheresis tubing set.

There is thus a need for a cryogenic storage bag that would achieve the post filling hermetic integrity of each cryogenic compartment. Further, such a needed storage bag would not require RF sealing of fluid channels between the compartments, which would enable the storage bag to withstand cryogenic temperatures without rupturing. Such a needed device would include a means to provide a durable connection between compartments at room temperature and frangible connection between the multiple compartments at cryogenic temperatures that would permit easy and reliable separation of the compartments from one another. Moreover, such a needed device would reduce the inter-compartmental space to minimize the space required for a given volume of fluid in order to optimize the cost effective storage of blood products in limited cryogenic storage space. To date no such device accomplishes these objectives but the present embodiment described herein.

### SUMMARY OF THE DISCLOSURE

To minimize the limitations found in the prior art, and to minimize other limitations that will be apparent upon the reading of the specification, the preferred embodiment of the present invention provides a cryogenic storage bag comprising a plurality of storage compartments and a plurality of tabs that will be both durable at room temperatures but frangible at cryogenic temperatures, in accordance with claim 1. Each compartment includes a top portion and a bottom portion. At least two of the plurality of frangible tabs connect each of the plurality of storage compartments to an adjacent storage compartment. Each of the plurality of frangible tabs includes at least one substantially V-shaped notch and a narrowest portion located equidistant from at least two adjacent storage compartments. The at least one notch connects to walls of the at least two adjacent storage compartments utilizing a joining portion of each of the plurality of frangible tabs. The narrowest portion may be approximately 0.02032 cm (0.008-inch) thickness and 0.254 cm (0.1-inch) long. The joining portion of each of the plurality of frangible tabs may average approximately 0.127 cm (0.05-inch) thickness and 0.0127 cm (0.005-inch) radius. The plurality of frangible tabs enables easy and reliable separation of the plurality of cryogenic storage compartments from one another at cryogenic temperatures while retaining effective hermetic integrity to each of the plurality of storage compartments. The top portion and the bottom portion of the at least two adjacent storage compartments may be connected to at least one of the plurality of frangible tabs. The at least two adjacent storage compartments may be separated when the at least two adjacent storage compartments are rotated on a main axis relative to one another which causes the plurality of frangible tabs to fracture along the at least one notch at each of plurality of frangible tabs.

It is a first objective of the present invention to provide a cryogenic storage bag that minimizes the separation between adjacent multiple storage compartments without requiring any fluid channel between the storage compartments.

A second objective of the present invention is to provide a cryogenic storage bag in which the filling of each compartment and subsequent hermetic integrity of each storage compartment is achieved without direct fluid channels existing between the storage compartments, and subsequent requirement of sealing those fluid channels.

A third objective of the present invention is to provide a cryogenic storage bag that does not require sealing of fluid channels between the multiple storage compartments thereby preventing the creation of thin sections of plastic that become vulnerable to rupture at cryogenic temperature.

A fourth objective of the present invention is to provide a cryogenic storage bag in which each of the multiple compartments is connected to at least one filling tube extending from a mixing chamber having a mixture of at least one cryoprotectant and a biological specimen.

A further objective of the present invention is to provide a cryogenic storage bag that includes a plurality of frangible tabs that provides a durable connection between storage compartments at all temperatures above a glass transition temperature of the storage compartment material, but become frangible connections between the multiple compartments at cryogenic temperatures that are below the glass transition temperature of the compartment material, thereby enabling easy and reliable separation of the storage compartments from one another without compromising the hermetic integrity of the multiple compartments or the need to expose the cellular contents of the storage compartments to temperatures that may be harmful to the cells.

A still further objective of the present invention is to provide a cryogenic storage bag comprising multiple compartments which minimizes the inter-compartment space in order to minimize the space required for a given volume of fluid, thus optimizing the cost effective storage of biological specimen in limited cryogenic storage space.

These and other advantages and features of the present invention are described with specificity so as to make the present invention understandable to one of ordinary skill in the art.

### BRIEF DESCRIPTION OF THE DRAWINGS

In order to enhance their clarity and improve understanding of these various elements and embodiments of the invention, elements in the figures have not necessarily been drawn to scale. Furthermore, elements that are known to be common and well understood to those in the industry are not depicted in order to provide a clear view of the various embodiments of the invention. Thus, the drawings are generalized in form in the interest of clarity and conciseness.
**FIG. 1** is a cross sectional view of at least two of a plurality of frangible tabs connected between at least two of a plurality of storage compartments of a cryogenic storage bag according to the preferred embodiment of the present invention;
**FIG. 2** is a top perspective view of the plurality of storage compartments and the plurality of frangible tabs of the cryogenic storage bag according to the preferred embodiment of the present invention;
**FIG. 3** is a top perspective view of the at least two adjacent storage compartments connected to the at least two of the plurality of frangible tabs of the cryogenic storage bag according to the preferred embodiment of the present invention; and
**FIG. 4** is a side perspective view of the plurality of storage compartments connected to at least one filling tube extending from a mixing chamber according to the preferred embodiment of the present invention.

### DETAILED DESCRIPTION OF THE DRAWINGS

In the following discussion that addresses a number of embodiments and applications of the present invention, reference is made to the accompanying drawings that form a part hereof, and in which is shown by way of illustration specific embodiments in which the invention may be practiced. It is to be understood that other embodiments may be utilized and changes may be made without departing from the scope of the present invention.

Various inventive features are described below that can each be used independently of one another or in combination with other features. However, any single inventive feature may not address any of the problems discussed above or only address one of the problems discussed above. Further, one or more of the problems discussed above may not be fully addressed by any of the features described below.

As used herein, the singular forms "a", "an" and "the" include plural referents unless the context clearly dictates otherwise. "And" as used herein is interchangeably used with "or" unless expressly stated otherwise. As used herein, the term 'about" means +/- 5% of the recited parameter. All embodiments of any aspect of the invention can be used in combination, unless the context clearly dictates otherwise.

Unless the context clearly requires otherwise, throughout the description and the claims, the words 'comprise', 'comprising', and the like are to be construed in an inclusive sense as opposed to an exclusive or exhaustive sense; that is to say, in the sense of "including, but not limited to". Words using the singular or plural number also include the plural and singular number, respectively. Additionally, the words "herein," "wherein", "whereas", "above," and "below" and words of similar import, when used in this application, shall refer to this application as a whole and not to any particular portions of the application. Throughout this description and "left" and "right" side references may be inverted without departing from the invention.

The description of embodiments of the disclosure is not intended to be exhaustive or to limit the disclosure to the precise form disclosed. While the specific embodiments of, and examples for, the disclosure are described herein for illustrative purposes, various equivalent modifications are possible within the scope of the disclosure, as those skilled in the relevant art will recognize.

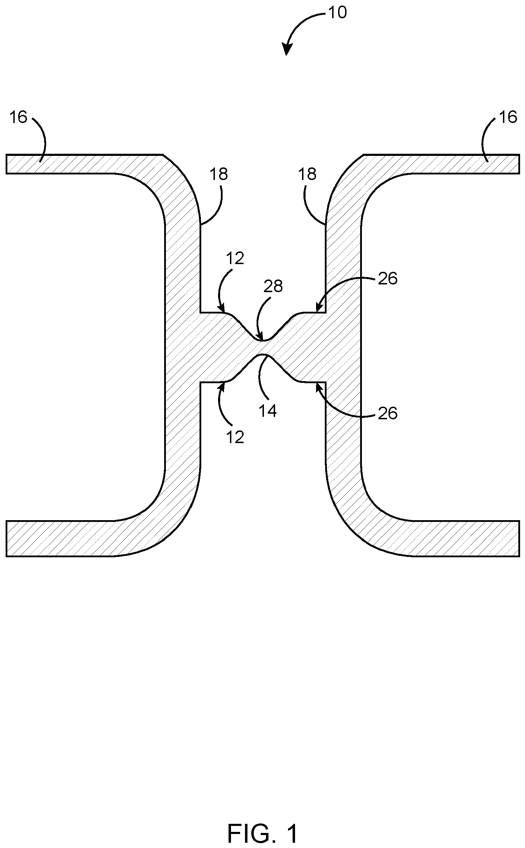

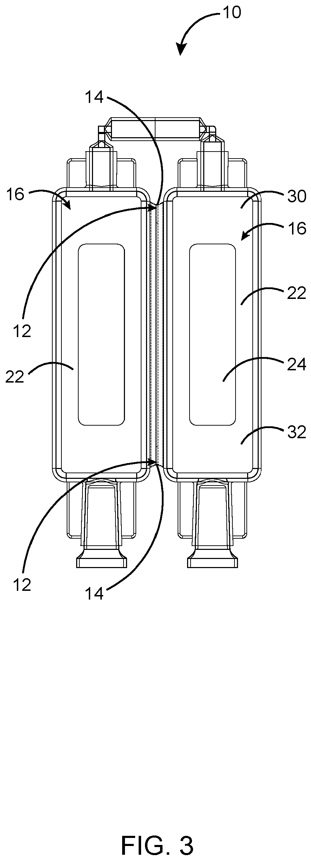

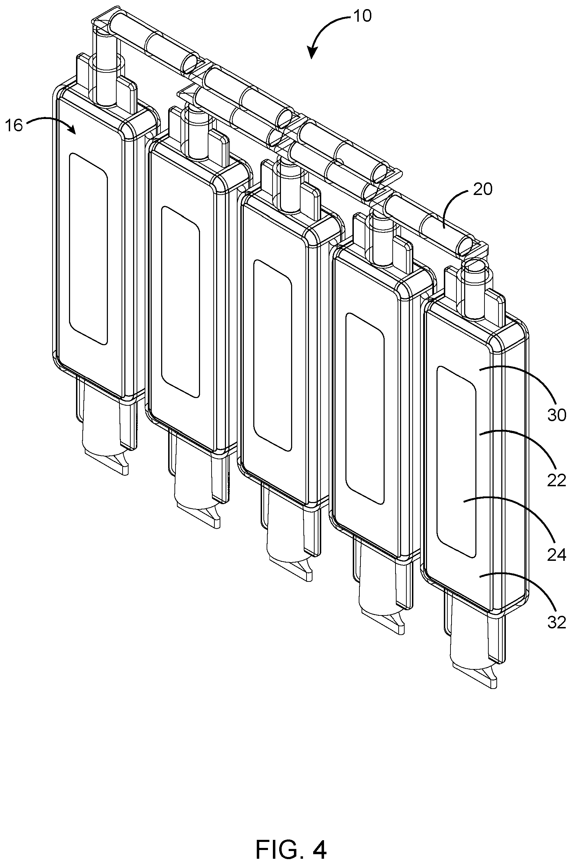

Referring first to FIGS. 1-4, a cryogenic storage bag for preserving various biological specimens such as cells, blood and living tissues at low temperatures for sustained periods according to the present invention is illustrated in different views and generally designated by the reference numeral **10.**

Referring to **FIG. 1****,** the cryogenic storage bag **10** comprises a plurality of storage compartments **16** and a plurality of frangible tabs **12.** At least two of the plurality of frangible tabs **12** are connected between at least two adjacent storage compartments **16.** Each of the plurality of frangible tabs **12** includes at least one substantially V-shaped notch **14.** The at least one notch **14** connects to walls **18** of at least two adjacent storage compartments **16** utilizing a joining portion **26** of each of the plurality of frangible tabs **12.** In the preferred embodiment, the joining portion **26** is approximately 0.127 cm (0.05-inch) thickness and approximately 0.0127 cm (0.005-inch) radius. The frangible tab **12** includes a narrowest portion **28** located equidistant from the at least two adjacent storage compartments **16** and is approximately 0.02032 cm (0.008-inch) thickness and approximately 0.254 cm (0.1-inch) long. The overall width of the frangible tabs **12,** including the at least one notch **14,** is approximately 0.2286 cm (0.090-inch) wide. The plurality of frangible tabs **12** enables easy and reliable separation of the plurality of storage compartments **16** from one another at cryogenic temperatures while retaining effective hermetic integrity to each of the plurality of storage compartments **16.** The plurality of frangible tabs **12** is durable at room temperature and frangible at cryogenic temperature.

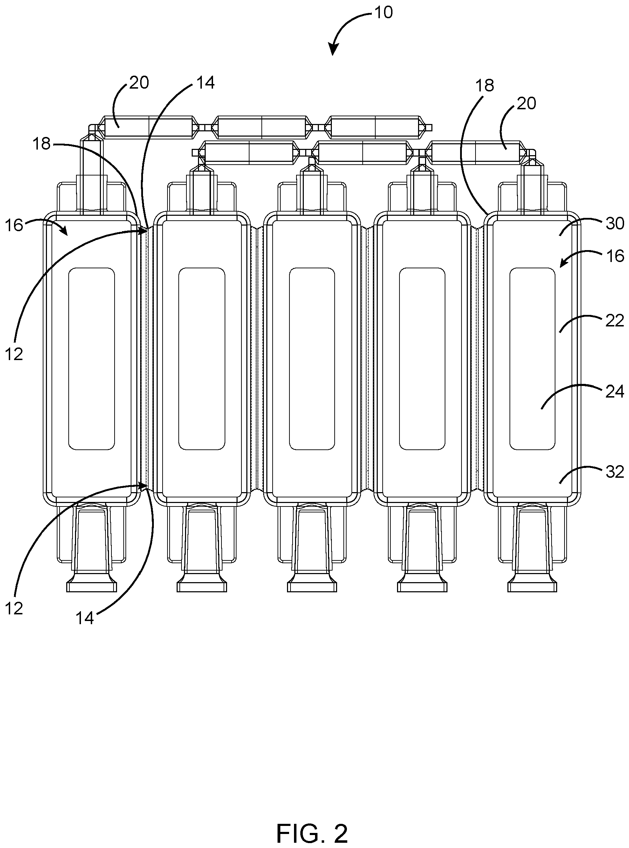

As shown in **FIG. 2****,** a ratio of the width of the V-shaped notches **14** of the plurality of frangible tabs **12** to the overall width of the frangible tabs **12** contributes to isolating a point of fracture to the narrowest portion **28** (see **FIG. 1**) of the double V-shaped notches **14** thereby minimizing the chance of propagation into the walls **18** of the adjacent cryogenic storage compartment **16.** In one configuration, the cryogenic storage bag **10** is blow molded ethylene vinyl acetate (EVA) type. In this configuration, a ratio of thickness of storage compartment wall **18** to the thickness of the narrowest portion **28** (see FIG. 1) of the double V-shaped notches **14** is in the range between about 1.0 and 5.0. A more preferred ratio is in the range of about 2.0 to 4.0, and a most preferred is a ratio of about 3.0. The plurality of frangible tabs **12** provide connections between the compartments at cryogenic temperatures to enable strong, reliable bonds at room temperature but allow easy and reliable separation of the storage compartments **16** from one another with a simple intentional rotating motion at cryogenic temperatures

As shown in **FIGS. 2-4****,** the storage compartments **16** include a top portion **30** and a bottom portion **32.** The top portion **30** and the bottom portion **32** of the at least two adjacent storage compartments **16** are connected to at least one of the plurality of frangible tabs **12.** When a user wishes to separate the two adjacent compartments **16** of the storage bag **10,** the two adjacent compartments **16** are rotated on a main axis relative to one another which causes the plurality of frangible tabs **12** to fracture along the at least one notch **14** at each of plurality of frangible tabs **12.** Each of the plurality of storage compartments **16** is connected to at least one filling tube **20** extending from a mixing chamber **(not shown)** having a mixture of at least one cryoprotectant and a biological specimen. Each storage compartment **16** includes a label portion **24** located on an external surface **22** of the storage compartment **16** to label unit identification bar codes of the storage compartments **16.**

As shown in **FIG. 2****,** five storage compartments **16** are connected to one another utilizing the plurality of frangible tabs **12.** Any number of storage compartments **16** can be stored in the preferred cryogenic storage bag **10.** In one aspect of the preferred embodiment, the five storage compartments **16** are fabricated from EVA. Each wall **18** of the storage compartment **16** is 0.05588 cm (0.022-inch) thickness and the frangible tab **12** is 0.2286 cm (0.09-inch) wide and 0.127 cm (0.05-inch) height with the substantially V-shaped notch **14** at a thinnest point of 0.02032 cm (0.008 inch). A ratio of the width of the V- shaped notch **14** to the overall width of the frangible tab **12** is 0.67. The frangible tabs **12** are attached at the top portion **30** and the bottom portion **32** of the two adjacent storage compartments **16.** Since the joining portion **26 (****FIG. 1****)** locates the structural weak point of the plurality of frangible tabs **12** equidistant from the at least two adjacent storage compartments **16,** a rotation on the main axis of the storage compartments **16** provides clean and reliable separation of the adjacent storage compartments **16** from one another at the cryogenic temperatures while retaining the effective hermetic integrity to each of the storage compartments **16.**

In the preferred configuration, the plurality of frangible tabs **12** is sufficiently strong such that they do not separate inadvertently, especially during normal handling of the cryogenic storage bag **10** at room temperature or at cryogenic temperatures. However, in certain situations, the frangible tabs **12** separate readily upon an application of precisely delivered mechanical force, yet even when this force is provided the frangible tabs **12** do not allow transmission of this mechanical force to the adjacent storage compartment walls **18.** Preferably, the frangible tabs **12** are fabricated from same material of the storage compartments **16** thereby simplifying the construction of the cryogenic storage bag **10.** In one embodiment, the frangible tabs **12** are fabricated utilizing a thin plastic material. However, other materials, configurations, and techniques are possible in other embodiments of the present invention. For example, in one alternative configuration of the cryogenic storage bag **10,** the plurality of frangible tabs **12** extends along up to about 90% of the distance from the top portion **30** to the bottom portion **32** of the adjacent storage compartments **16** in a continuous fashion, or be interrupted to form sections or tabs. In another configuration, there are up to three interrupted frangible tabs **12,** each one is approximately 10% of the length of an individual storage compartment **16** disposed evenly along the length of the frangible tab **12.** In yet another configuration, there are two interrupted sections, each one is approximately 10% length of the edge of individual storage compartment **16,** and is disposed near the top portion **30** and the bottom portion **32** of the storage compartments **16.**

In the preferred embodiment, the cryogenic storage bag **10** is fabricated from blow molded EVA plastic. The cryogenic storage bag **10** can be fabricated from other materials such as, but not limited to, PVC and other plastics utilizing any common fabrication method such as RF or thermal welding. Preferably, typical wall thickness of the EVA cryogenic storage bag suitable for controlled-rate-freezing and cryogenic storage ranges between 0.0381 and 0.0762 cm (0.015 and 0.03 inches), with a more preferred value of 0.0508 to 0.07112 cm (0.02 to 0.028 inches), and most preferred is about 0.05588 cm (0.022 inches). The wall thickness is independent of any ratios described herein, and may be adjusted to suit the application.

In use, each storage compartment **16** of the cryogenic storage bag **10** is filled with approximately 5 ml of a mixture of blood as the biological specimen and Dimethyl Sulfoxide (DMSO) as cryoprotectant (4 ml of blood and 1 ml of 55% DMSO solution in Dextran 40). After RF sealing of the individual filling tubes **20** leading to each of the five individual compartments **16,** the cryogenic storage bag **10** is placed in a metal canister for storage in liquid nitrogen (LN2). The temperature of the bag **10** and its contents can be lowered to -196 degrees Celsius by reducing the temperature utilizing any temperature reducing mechanism well known in the art. Thereafter, the canister is removed from the LN2 and the temperature of the canister, the cryogenic storage bag **10,** and the inside contents is raised to a vapor phase of LN2. Upon raising the temperature, the canister is opened and the cryogenic storage bag **10** is carefully removed. While keeping the cryogenic storage bag **10** in the nitrogen vapor located just above the LN2, the rightmost compartment is rotated downwards, then upwards, with respect to the remaining four compartments **16.** Thereafter, the rightmost compartment (See **FIG. 2**) is completely and cleanly separated from the adjacent storage compartment **16** along the V-notches of the at least two frangible tabs **12** without any propagation of fracture to the adjacent compartments **16.** Subsequently, the remaining four compartments **16** are separated utilizing the aforementioned method.

In another configuration, after the step of temperature reduction, the cryogenic storage bag **10** is not fully removed from the canister while secured in the vapor phase nitrogen, but instead shifted to the right so that the frangible tabs **12** are positioned over the sharp edge of the canister. A downward motion is applied and the rightmost compartments **16** are separated along the V-notches **14** of the frangible tabs **12** with no propagation of fracture into the adjacent storage compartments **16.**

In yet another configuration, a cleaning tool is utilized to cleanly separate the storage compartments **16.** The cleaning tool includes a separating portion designed to descend into a region of the frangible tabs **12.** The width of the separating portion is slightly less than the space between the storage compartments **16.** A blade is positioned at the center of the cleaning tool and extended downwards from a bottom surface of the separating portion. This arrangement automatically positions the blade above the narrowest portion of the double V- notches **14** of the frangible tabs **12** as it was lowered to make contact with the frangible tabs **12.** This method also results in a clean separation along the V-notches **14** of the frangible tabs **12.**

The abovementioned methods provide different effective options for the reliable separation of the storage compartments **16** along the frangible tabs **12** when the cryogenic storage bag **10** is at cryogenic temperatures. However, these methods are in no way intended to be limiting. An added advantage of the preferred embodiment is that the number of compartments **16** may vary preferably between two and ten per cryogenic bag **10,** but cryogenic bags **10** may be formed with ten or more individual compartments **16.**

In the preferred embodiment, the filling of each storage compartment **16,** and subsequent hermetic integrity of each storage compartment **16** is achieved without direct fluid channels existing between the storage compartments **16,** and subsequent requirement to seal those fluid channels. A further advantage of the present invention is that the frangible tabs **12** provide a durable connection between storage compartments **16** at all temperatures above the glass transition temperature of the storage compartment material, including room temperature, but become frangible connections between the multiple compartments **16** at cryogenic temperatures that are below the glass transition temperature of the compartment material thereby enabling easy and reliable separation of the storage compartments **16** from one another without compromising the hermetic integrity of the multiple compartments **16** or the need to expose the cellular contents of the storage compartments **16** to temperatures that may be harmful to the biological specimen.

The foregoing description of the preferred embodiment of the present invention has been presented for the purpose of illustration and description. It is not intended to be exhaustive or to limit the invention to the precise form disclosed. Many modifications and variations are possible in light of the above teachings. It is intended that the scope of the present invention not be limited by this detailed description, but by the claims appended hereto.

## Claims

1. A cryogenic storage bag (10) comprising:
a plurality of storage compartments (16), each compartment (16) comprising a top portion (30) and a bottom portion (32); and
a plurality of frangible tabs (12), at least two of the plurality of frangible tabs (12) connecting each of the plurality of storage compartments (16) to an adjacent storage compartment (16), wherein each of the plurality of frangible tabs (12) includes at least one substantially V-shaped notch (14) forming a narrowest portion (28) located equidistant from at least two adjacent storage compartments (16), the at least one substantially V-shaped notch (14) connecting to walls (18) of the at least two adjacent storage compartments (16) utilizing a joining portion (26) of each of the plurality of frangible tabs (12);
whereby the plurality of frangible tabs (12) enables separation of the plurality of storage compartments (16) from one another at cryogenic temperatures while retaining an effective hermetic integrity to each of the plurality of storage compartments (16).

2. The cryogenic storage bag (10) of claim 1 wherein the joining portion (26) of each of the plurality of frangible tabs (12) is about 0.127 cm (0.05 inch) in thickness and has a radius of about 0.0127 cm (0.005 inch).

3. The cryogenic storage bag (10) of claim 1 or 2 wherein the narrowest portion (28) is approximately 0.02032 cm (0.008-inch) thickness and 0.254 cm (0.1-inch) long.

4. The cryogenic storage bag (10) of any one of claims 1-3 wherein the top portion (30) and the bottom portion (32) of the at least two adjacent storage compartments (16) are connected to at least one of the plurality of frangible tabs (12).

5. The cryogenic storage bag (10) of any one of claims 1-4 wherein the at least two adjacent storage compartments (16) are separated when the at least two adjacent storage compartments (16) are rotated on a main axis relative to one another which causes the plurality of frangible tabs (12) to fracture along the at least one substantially V-shaped notch (14) at each of the plurality of frangible tabs (12).

6. The cryogenic storage bag (10) of any one of claims 1-5 wherein each of the plurality of storage compartments (10) is connected to at least one filling tube (20) extending from a mixing chamber having a mixture of at least one cryoprotectant and a biological specimen.

7. The cryogenic storage bag (10) of any one of claims 1-6 wherein each compartment (16) has a glass transition temperature and the frangible tabs (12) provide a durable connection between storage compartments (16) at temperatures above the glass transition temperature and provide a frangible connection between storage compartments (16) at temperatures below the glass transition temperature.

8. The cryogenic storage bag (10) of any one of claims 1-7 wherein the cryogenic storage bag (10) is fabricated from blow molded ethylene vinyl acetate.

## Patentansprüche

1. Kryogener Aufbewahrungsbeutel (10), umfassend:
eine Vielzahl von Aufbewahrungskammern (16), wobei jede Kammer (16) einen oberen Abschnitt (30) und einen unteren Abschnitt (32) umfasst; und
eine Vielzahl von zerbrechlichen Laschen (12), wobei mindestens zwei der Vielzahl von zerbrechlichen Laschen (12) jede der Vielzahl von Aufbewahrungskammern (16) mit einer benachbarten Aufbewahrungskammer (16) verbinden, wobei jede der Vielzahl von zerbrechlichen Laschen (12) mindestens eine im Wesentlichen V-förmige Kerbe (14) aufweist, die einen schmalsten Abschnitt (28) bildet, der im gleichen Abstand von mindestens zwei benachbarten Aufbewahrungskammern (16) angeordnet ist, wobei die mindestens eine im Wesentlichen V-förmige Kerbe (14) mit Wänden (18) der mindestens zwei benachbarten Aufbewahrungskammern (16) unter Verwendung eines Verbindungsabschnitts (26) jeder der Vielzahl von zerbrechlichen Laschen (12) verbunden wird;
wobei die Vielzahl von zerbrechlichen Laschen (12) die Trennung der Vielzahl von Aufbewahrungskammern (16) voneinander bei kryogenen Temperaturen ermöglicht, während eine wirksame hermetische Integrität zu jeder der Vielzahl von Aufbewahrungskammern (16) aufrechterhalten wird.

2. Kryogener Aufbewahrungsbeutel (10) nach Anspruch 1, wobei der Verbindungsabschnitt (26) jeder der Vielzahl von zerbrechlichen Laschen (12) eine Dicke von ungefähr 0,127 cm (0,05 Zoll) und einen Radius von ungefähr 0,0127 cm (0,005 Zoll) aufweist.

3. Kryogener Aufbewahrungsbeutel (10) nach Anspruch 1 oder 2, wobei der schmalste Abschnitt (28) eine Dicke von ungefähr 0,02032 cm (0,008 Zoll) und eine Länge von ungefähr 0,254 cm (0,1 Zoll) aufweist.

4. Kryogener Aufbewahrungsbeutel (10) nach einem der Ansprüche 1-3, wobei der obere Abschnitt (30) und der untere Abschnitt (32) der mindestens zwei benachbarten Aufbewahrungskammern (16) mit mindestens einer der Vielzahl von zerbrechlichen Laschen (12) verbunden sind.

5. Kryogener Aufbewahrungsbeutel (10) nach einem der Ansprüche 1-4, wobei die mindestens zwei benachbarten Aufbewahrungskammern (16) voneinander getrennt werden, wenn die mindestens zwei benachbarten Aufbewahrungskammern (16) auf einer Hauptachse in Bezug aufeinander gedreht werden, wodurch verursacht wird, dass die Vielzahl von zerbrechlichen Laschen (12) entlang der mindestens einen im Wesentlichen V-förmigen Kerbe (14) an jeder der Vielzahl von zerbrechlichen Laschen (12) bricht.

6. Kryogener Aufbewahrungsbeutel (10) nach einem der Ansprüche 1-5, wobei jede der Vielzahl von Aufbewahrungskammern (10) mit mindestens einem Füllrohr (20) verbunden ist, das sich von einer Mischkammer erstreckt, die ein Gemisch aus mindestens einem Kälteschutzmittel und einer biologischen Probe enthält.

7. Kryogener Aufbewahrungsbeutel (10) nach einem der Ansprüche 1-6, wobei jede Kammer (16) eine Glasübergangstemperatur aufweist und die zerbrechlichen Laschen (12) eine dauerhafte Verbindung zwischen Aufbewahrungskammern (16) bei Temperaturen über der Glasübergangstemperatur bereitstellen und eine zerbrechliche Verbindung zwischen Aufbewahrungskammern (16) bei Temperaturen unter der Glasübergangstemperatur bereitstellen.

8. Kryogener Aufbewahrungsbeutel (10) nach einem der Ansprüche 1-7, wobei der kryogene Aufbewahrungsbeutel (10) aus blasgeformtem Ethylenvinylacetat hergestellt ist.

## Revendications

1. Sac de rangement cryogénique (10) comprenant :
une pluralité de compartiments de rangement (16), chaque compartiment (16) comprenant une partie supérieure (30) et une partie inférieure (32) ; et
une pluralité de languettes cassables (12), au moins deux languettes de la pluralité de languettes cassables (12) reliant chaque compartiment de la pluralité de compartiments de rangement (16) à un compartiment de rangement (16) adjacent, dans lequel chaque languette de la pluralité de languettes cassables (12) comprend au moins une encoche sensiblement en forme de V (14) formant une partie la plus étroite (28) située à égale distance d'au moins deux compartiments de rangement (16) adjacents, l'au moins une encoche sensiblement en forme de V (14) se raccordant à des parois (18) des au moins deux compartiments de rangement (16) adjacents en utilisant une partie de jonction (26) de chaque languette de la pluralité de languettes cassables (12) ;
moyennant quoi la pluralité de languettes cassables (12) permet la séparation des multiples compartiments de rangement (16) les uns des autres à des températures cryogéniques tout en conservant une intégrité hermétique efficace de chaque compartiment de la pluralité de compartiments de rangement (16).

2. Sac de rangement cryogénique (10) selon la revendication 1, dans lequel la partie de jonction (26) de chaque languette de la pluralité de languettes cassables (12) fait environ 0,127 cm (0,05 pouce) d'épaisseur et a un rayon d'environ 0,0127 cm (0,005 pouce) .

3. Sac de rangement cryogénique (10) selon la revendication 1 ou 2, dans lequel la partie la plus étroite (28) fait approximativement 0,02032 cm (0,008 pouce) d'épaisseur et 0,254 cm (0,1 pouce) de longueur.

4. Sac de rangement cryogénique (10) selon l'une quelconque des revendications 1 à 3, dans lequel la partie supérieure (30) et la partie inférieure (32) des au moins deux compartiments de rangement (16) adjacents sont reliées à au moins une languette de la pluralité de languettes cassables (12).

5. Sac de rangement cryogénique (10) selon l'une quelconque des revendications 1 à 4, dans lequel les au moins deux compartiments de rangement (16) adjacents sont séparés lorsque les au moins deux compartiments de rangement (16) adjacents sont tournés sur un axe principal l'un par rapport à l'autre, ce qui amène la pluralité de languettes cassables (12) à se fracturer le long de l'au moins une encoche sensiblement en forme de V (14) au niveau de chaque languette de la pluralité de languettes cassables (12).

6. Sac de rangement cryogénique (10) selon l'une quelconque des revendications 1 à 5, dans lequel chaque compartiment de la pluralité de compartiments de rangement (10) est raccordé à au moins un tube de remplissage (20) s'étendant depuis une chambre de mélange comportant un mélange d'au moins un agent cryoprotecteur et d'un échantillon biologique.

7. Sac de rangement cryogénique (10) selon l'une quelconque des revendications 1 à 6, dans lequel chaque compartiment (16) présente une température de transition vitreuse et les languettes cassables (12) forment une liaison durable entre les compartiments de rangement (16) à des températures supérieures à la température de transition vitreuse et forment une liaison cassable entre les compartiments de rangement (16) à des températures inférieures à la température de transition vitreuse.

8. Sac de rangement cryogénique (10) selon l'une quelconque des revendications 1 à 7, le sac de rangement cryogénique (10) étant fabriqué à partir d'éthylène-acétate de vinyle moulé par soufflage.
